# EUROPÄISCHE PATENTSCHRIFT

(11) **EP 1 120 878 B1**
(45) Veröffentlichungstag und Bekanntmachung des Hinweises auf die Patenterteilung: **24.11.2004**
(21) Anmeldenummer: 00120715.8
(22) Anmeldetag: 22.09.2000
(51) Int. Cl.: H02G 9/06, H01R 13/00, F16L 11/127, A47L 9/24

(54) **Anschlussmuffe für einen mit einer Schutzhülle für zugentlastete elektrische Leiter versehenen Saugschlauch**
Coupling sleeve for a suction hose with a protective sheath for strain-relieved electrical conductors
Manchon d'accouplement pour un tuyau d'aspiration flexible avec une gaine protectrice pour câbles électriques à soulagement de tension

(30) Priorität: 26.01.2000 DE 20001357 U
(43) Veröffentlichungstag der Anmeldung: 01.08.2001
(73) Patentinhaber: TRUPLAST KUNSTSTOFFTECHNIK GMBH, D-35428 Langgöns (DE)
(72) Erfinder: Linhart, Georg, 61206 Wöllstadt (DE)
(74) Vertreter: Oppermann, Ewald, Dipl.-Ing.

(56) Entgegenhaltungen:
- DE-U- 20 001 358
- DE-U- 29 708 274
- DE-U- 29 912 640
- US-A- 6 015 298

## Beschreibung

Die Erfindung bezieht sich auf eine Anschlussmuffe, umfassend einen hülsenförmigen Muffenkörper und ein Zugentlastungselement, für einen mit einer Schutzhülle für zugentlastete elektrische Leiter versehenen Saugschlauch nach dem Oberbegriff des Anspruches 1. Eine derartige Anschlussmuffe ist aus DE-Gbm 29 708 274 bekannt.

Hierbei ist im Mantel des in den Schlauch teilweise eingesteckten Muffenkörpers eine Ringnut vorgesehen, in der an einer gemeinsamen Stelle zwei Fäden eines aus der Schutzhülle herausgeführten Zugentlastungselementes münden. Die Fäden umgreifen den Boden der Ringnut gegenläufig und sind an einer Stelle, an der sie wieder zusammentreffen, miteinander verknotet und damit in der Lage, auf sie einwirkende Zugkräfte gemeinsam aufzunehmen.
Bei der bekannten Anschlussmuffe ist auch eine Aussenmuffe vorgesehen, die die Ringnut überdeckt und an ihrer inneren Mantelfläche mindestens einen erhabenen Gewindegang aufweist, der in ein Wellental des aussen schraubenförmig verlaufende Wellenberge und Wellentäler aufweisenden Saugschlauches eingreift. Die bekannte Ausführung hat sich bereits bewährt, verursacht jedoch, infolge der Ringnut, einen verhältnismässig grossen Aussendurchmesser des Muffenkörpers

Es ist auch bereits eine Anschlussmuffe vorgeschlagen worden, bei der an der Innenwand eines Saugschlauches ebenfalls eine Schutzhülle für elektrische Leiter und ein Zugentlastungselement vorgesehen ist. Ein Ende des Zugentlastungselementes ist aus der Schutzhülle heraus in eine nutartige Vertiefung eines ersten Muffenteils geführt und hier durch eingespritztes Material festgelegt. Ferner ist ein zweites Muffenteil vorgesehen, das mit dem ersten Muffenteil durch das in die nutartige Vertiefung eingespritzte Material verbunden ist. Das Einspritzen des das Ende des Zugentlastungselementes festlegenden und die beiden Muffenteile miteinander verbindenden Materials ist ein aufwendiger Fertigungsvorgang.

Es ist ferner ein aussen wendelförmig verlaufende Wellentäler und Wellenberge aufweisender Staubsaugerschlauch mit elektrischen Leitern bekannt, die in einer - an der Schlauchinnenwand befestigten - Schutzhülle angeordnet sind. In ein Ende des Schlauches ist eine Endbuchse eingesteckt, die einen an ihrem hinteren Ende offenen Axialschlitz aufweist, dessen Flanken in eine zur Aufnahme der Schutzhülle ausgebildete Anformung übergehen. Die Enden der elektrischen Leiter sind jeweils durch den Axialschlitz hindurchgeführt und danach mit einem Schleifring eines Schleifringträgers verbunden, der den Schlauch und die Endbuchse umgibt. Der Schleifringträger greift mit einem an seiner inneren Oberfläche angeformten erhabenen Gewindegang in ein Wellental des Schlauches ein und ist formschlüssig mit der Endbuchse verbunden (DE-Gbm 299 12 640).

Aufgabe der Erfindung ist es, bei der Anschlussmuffe der im Oberbegriff des Anspruches 1 genannten Art das Zugentlastungselement so anzuordnen, dass eine Ringnut entfällt und dadurch eine Vergrösserung des Aussendurchmessers der Muffe vermieden wird.

Die gestellte Aufgabe wird durch die im kennzeichnenden Teil des Anspruches 1 angegebene Ausbildung gelöst.

Zweckmässige Aus- und Weiterbildungen der Erfindung sind in den Ansprüchen 2 bis 4 angegeben.

Ein Ausführungsbeispiel der Erfindung ist in der Zeichnung dargestellt. Es zeigen:
Fig. 1 einen Längsschnitt durch eine Anschlussmuffe.
Fig. 2 eine perspektivische Darstellung eines Muffenkörpers.

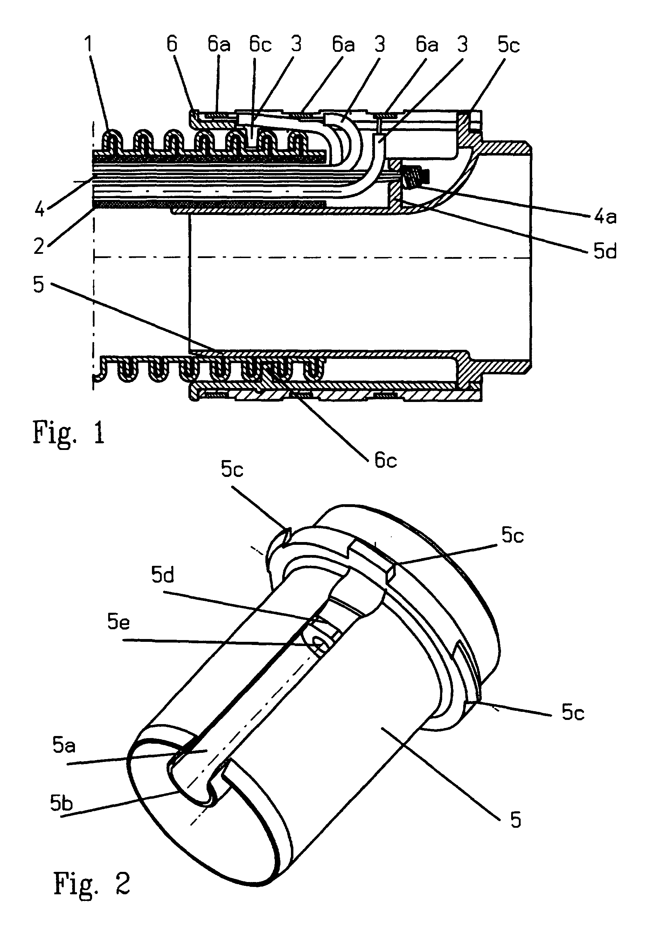

In Fig. 1 ist mit 1 ein innen glatter und aussen wendelförmig verlaufende Wellenberge und Wellentäler aufweisender Schlauch bezeichnet. Das Bezugszeichen 2 gilt für eine an der Innenwand des Schlauches 1 befestigte Schutzhülle für elektrische Leiter 3 und ein Zugentlastungselement 4 für die elektrischen Leiter 3.

In den Schlauch 1 ist ein hülsenförmiger Muffenkörper 5 teilweise eingesteckt. Von dessen Einsteckende geht ein axialer Schlitz 5a (Fig.2) aus, dessen Flanken in eine für die Aufnahme des zugeordneten Endes der Schutzhülle 2 ausgebildete rohrartige Anformung 5b (Fig.2) übergehen, Die Anformung 5b ist am Einsteckende des Muffenkörpers 5 offen und am entgegengesetzten Ende geschlossen.

Die elektrischen Leiter 3 sind im Bereich eines vom Schlauch 1 nicht bedeckten Abschnittes des Schlitzes 5a aus dem Muffenkörper 5 herausgeführt und dort jeweils mit einem Schleifring 6a eines Schleifringträgers 6 verbunden. Der Schleifringträger 6 liegt teilweise auf der äusseren Mantelfläche des Schlauches 1 auf und greift mit einem erhabenen Gewindegang 6c in ein Wellental des Schlauches 1 ein. An seinem vorderen Ende sind Ausnehmungen des Schleifringträgers 6 jeweils von einem Nocken 5c des Muffenkörpers 5 durchgriffen. Hierdurch ist der Schleifringträger 6 radial und axial festgelegt.

In der rohrartigen Anformung 5b ist eine Querwand 5d eingeformt, die eine für den Durchgriff des Zugentlastungselementes 4 dienende Ausnehmung 5e (Fig.2) aufweist. Wie aus Fig.1 ersichtlich, ist das Zugentlastungselement 4 auf der zum vorderen Ende des Muffenkörpers 5 gerichteten Seite der Querwand 5d mit einer Verdickung 4a gegen Herausziehen aus seiner Lage gesichert.

Die Verdickung 4a kann zweckmässig aus einem aus dem Zugentlastungslement 4 gebildeten Knoten bestehen, wie in Fig. 1 dargestellt. Um den Widerstand gegen Herausziehen aus der Querwand 5d zu verstärken, kann der Knoten mit einem selbsthärtenden Material getränkt sein, beispielsweise einem Sekundenkleber oder einem anderen geeigneten Kleber.

Die Verdickung 4a kann aber auch aus einer am Zugentlastungselement 4 befestigten Krampe gebildet sein (nicht dargestellt).

## Patentansprüche

1. Anschlussmuffe, umfassend einen hülsenförmigen Muffenkörper (5) und ein Zugentlastungselement (4), für einen mit einer Schutzhülle für zugentlastete elektrische Leiter versehenen Saugschlauch, wobei
die Schutzhülle (2) an der inneren Mantelfläche des Saugschlauches (1) befestig ist, in den der hülsenförmige Muffenkörper (5) teilweise einsteckbar ist;
vom Einsteckende des Muffenkörpers (5) ein axialer Schlitz (5a) ausgeht, dessen Flanken in eine für die Aufnahme des zugeordneten Endes der Schutzhülle (2) ausgebildete, rohrartige Anformung (5b) übergehen, die am Einsteckende des Muffenkörpers (5) offen und am entgegengesetzten Ende geschlossen ist; und
im Bereich eines vom Schlauch (1) nicht bedeckten Abschnittes des axialen Schlitzes (5a) aus dem Muffenkörper (5) die elektrischen Leiter (3) herausführbar sind, während ein zugleich mit den elektrischen Leitern (3) aus der Schutzhülle (2) herausragendes Ende des Zugentlastungselementes (4) mit dem Muffenkörper (5) zugsicher vereinigt ist;
**dadurch gekennzeichnet, dass**
das Zugentlastungselement (4) eine in der rohrartigen Anformung (5b) vorgesehene, quer zur Achse des Muffenkörpers (5) gerichtete Querwand (5d) durchgreift und auf der zum vorderen Ende des Muffenkörpers (5) gerichteten Seite der Querwand (5d) mit einer Verdickung (4a) gegen Herausziehen aus seiner Lage gesichert ist.

2. Anschlussmuffe nach Anspruch 1, **dadurch gekennzeichnet, dass** die Verdickung (4a) aus einem aus dem Zugentlastungselement (4) gebildeten Knoten besteht.

3. Anschlussmuffe nach Anspruch 2, **dadurch gekennzeichnet, dass** der Knoten mit einem selbsthärtenden Material getränkt ist.

4. Anschlussmuffe nach Anspruch 1, **dadurch gekennzeichnet, dass** die Verdickung (4a) aus einer am Zugentlastungselement (4) befestigten Krampe besteht.

## Claims

1. Connection collar, comprising a sleeve-like collar body (5) and a strain relief element (4), for a suction hose provided with a protective sleeve for strain-relieved electrical conductors, wherein:
the protective sleeve (2) is attached to the inner surface of the suction hose (1), into which the sleeve-like collar body (5) can be partly inserted;
an axial slot (5a) extends from the insertion end of the collar body (5), the flanks of which slot turn into a tube-like formation (5b) for receiving the associated end of the protective sleeve (2), which formation is open at the insertion end of the collar body (5) and is closed at the opposite end; and
in the region of a section of the axial slot (5a) which is not covered over by the hose (1), the electrical conductors (3) can be lead out of the collar body (5), whilst an end of the strain relief element (4) projecting out of the protective sleeve (2) together with the electrical conductors (3) is united with the collar body (5) in a strain-secure manner;
**characterised in that**
the strain relief element (4) engages through a transverse wall (5d), directed transversely to the axis of the collar body (5) and provided in the tube-like formation (5b), and is secured against being pulled out of its position with a thickening (4a) at the side of the transverse wall (5d) directed towards the forward end of the collar body (5).

2. Connection collar according to Claim 1, **characterised in that** the thickening (4a) is constituted by a knot formed of the strain relief element (4).

3. Connection collar according to Claim 2, **characterised in that** the knot is impregnated with a self-hardening material.

4. Connection collar according to Claim 1, **characterised in that** the thickening (4a) is constituted by a cramp fastened to the strain relief element (4).

## Revendications

1. Manchon de raccordement d'un tuyau souple d'aspiration muni d'une gaine de protection de conducteurs électriques dont la tension mécanique est relâchée, ayant les caractéristiques :
a) la gaine de protection (2) est fixée à la surface latérale intérieure du tuyau souple d'aspiration (1), dans lequel est enfilé partiellement un corps de manchon (5) en forme de douille ;
b) de l'extrémité, par laquelle le corps de manchon (5) est enfilé, part une fente axiale (5a), dont les flancs s'étendent en une conformation tubulaire (5b), qui est constituée pour la réception de l'extrémité associée de la gaine de protection (2), qui est ouverte à l'extrémité par laquelle le corps de manchon (5) est enfilé et qui est fermée à l'extrémité opposée;
c) dans la partie d'un tronçon de la fente axiale (5a) qui n'est pas recouvert par le tuyau souple (1), les conducteurs électriques (3) sortent du corps de manchon (5), tandis qu'une extrémité d'un élément de relâchement de la tension (4), qui fait saillie de la gaine de protection (2) en même temps que les conducteurs électriques (3), est réunie au corps de manchon (5) de manière à résister à la traction,
**caractérisé par** les caractéristiques :
d) l'élément de relâchement de la tension (4) s'accroche en la traversant à une paroi transversale (5d) qui est prévue dans la conformation tubulaire (5b) et qui est dirigée transversalement à l'axe du corps de manchon (5) et est empêché, du côté de la paroi transversale (5d) tourné vers l'extrémité avant du corps de manchon (5), de sortir de sa position par un épaississement (4a).

2. Manchon de raccordement suivant la revendication 1, **caractérisé en ce que** l'épaississement (4a) est constitué d'un noeud formé dans l'élément de relâchement de la tension (4).

3. Manchon de raccordement suivant la revendication 1 et 2, **caractérisé en ce que** le noeud est imprégné d'une matière auto-durcissante.

4. Manchon de raccordement suivant la revendication 1, **caractérisé en ce que** l'épaississement (4a) est constitué d'un crochet fixé à l'élément de relâchement de la tension (4).
